(19) Europäisches Patentamt
European Patent Office
Office européen des brevets

(11) **EP 2 870 040 B1**

(12) **FASCICULE DE BREVET EUROPEEN**

(45) Date de publication et mention de la délivrance du brevet:
**23.01.2019 Bulletin 2019/04**

(21) Numéro de dépôt: **13744682.9**

(22) Date de dépôt: **03.07.2013**

(51) Int Cl.:
***B60W 10/18*** *(2012.01)*    ***B60W 10/20*** *(2006.01)*
***B60W 30/12*** *(2006.01)*

(86) Numéro de dépôt international:
**PCT/FR2013/051567**

(87) Numéro de publication internationale:
**WO 2014/006327 (09.01.2014 Gazette 2014/02)**

(54) **DISPOSITIF ET PROCÉDÉ DE CONTRÔLE DE TRAJECTOIRE D'UN VÉHICULE**

VORRICHTUNG UND VERFAHREN ZUR STEUERUNG DER FAHRLINIE EINES FAHRZEUGS

DEVICE AND METHOD FOR CONTROLLING THE TRAJECTORY OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.07.2012 FR 1256339**

(43) Date de publication de la demande:
**13.05.2015 Bulletin 2015/20**

(73) Titulaire: **Renault S.A.S.**
**92100 Boulogne-Billancourt (FR)**

(72) Inventeurs:
• **MINOIU-ENACHE, Nicoleta**
  **F-78000 Versailles (FR)**
• **CHAPUIS, Cédric**
  **F-78000 Versailles (FR)**

(56) Documents cités:
**EP-A2- 1 950 115          DE-A1-102011 085 423**
**US-A1- 2004 158 377     US-A1- 2007 164 852**
**US-A1- 2007 225 914**

EP 2 870 040 B1

**Description**

L'invention concerne un dispositif d'élaboration en temps réel de contrôle de trajectoire d'un véhicule. L'invention concerne aussi un véhicule équipé de ce dispositif.

L'invention répond notamment à un besoin de prévention active des accidents. Les accidents par sortie involontaire de la voie de circulation représentent encore aujourd'hui une part importante de l'accidentologie. Pour renforcer la sécurité des passagers, les constructeurs automobiles mettent déjà en oeuvre une prévention passive en réalisant des véhicules de plus en plus résistants aux chocs et absorbant une part importante de l'énergie due à l'impact. La prévention active consiste à rendre le véhicule capable d'évaluer sa dynamique et de reconnaître son environnement afin de disposer d'une mesure de risque qui reflète la situation. Des actions peuvent alors être entreprises automatiquement ou en partage avec le conducteur afin de maintenir le véhicule dans sa voie de circulation en cas de manque de vigilance, d'endormissement, de malaise ou d'événement extérieur impromptu tel qu'une rafale soudaine de vent ou une irrégularité conséquente de la chaussée. Il s'agit de la fonction de sécurité active de maintien de trajectoire (« Lane Keeping » ou « Lane Departure Avoidance » en anglais).

Le document DE 10 2011 085 423 décrit un dispositif et un procédé correspondant au préambule de la revendication 1 et de la revendication 2.

Parmi les connaissances de l'état antérieur de la technique, le document EP1790542 divulgue un appareil de prévention de sortie de voie pour un véhicule automobile. Une force de freinage qui décélère le véhicule, est appliquée pour contrôler un mouvement de lacet de façon à ramener le véhicule au centre de la voie de circulation en cas de déviation interne ou externe par rapport à la courbure de la route.

Le procédé et le dispositif divulgués dans ce document réagissent contre une perturbation causée par la courbure de la route en ralentissant le véhicule, essentiellement pour reporter momentanément son poids sur les roues avant lorsqu'il aborde un virage. Cependant le procédé et le dispositif divulgués conviennent plus difficilement pour un maintien continu de la trajectoire en prenant en compte de nombreuses perturbations susceptibles d'intervenir sur le système de contrôle lui-même comme par exemple une variation de vitesse ou d'adhérence des roues.

De façon générale dans l'état antérieur de la technique, l'assistance active est fournie soit par l'intermédiaire de la direction assistée électrique des roues avant, soit par freinage différentiel des roues sans tenir compte de manière satisfaisante de la diversité de réactions possibles du véhicule en fonction de la nature de la perturbation.

Un problème important pour réaliser des automatismes de fonctions actives de maintien de trajectoire, est celui d'assurer leur robustesse face à des situations variées.

Un problème incident est celui d'adapter en temps réel à la vitesse du véhicule et/ou à l'adhérence de la route, un dispositif automatique qui intervient sur la trajectoire du véhicule pour prévenir la sortie de voie sans perte de contrôle.

L'invention a pour objectif de répondre aux problèmes posés par l'état antérieur de la technique, notamment en termes d'efficacité tout en évitant des pertes d'énergie regrettables.

Pour atteindre cet objectif, l'invention a pour objet un dispositif de contrôle de trajectoire d'un véhicule, comprenant un module d'élaboration en temps réel d'une consigne d'action stabilisante applicable sur le véhicule en multipliant un vecteur d'état du véhicule par un gain à chaque instant d'échantillonnage, et un module de production du gain adapté en temps réel à une plage de vitesse à laquelle appartient la vitesse du véhicule et au vecteur d'état en minimisant une somme d'au moins deux carrés d'écarts de trajectoire déduits du vecteur d'état.

L'invention a aussi pour objet un procédé de contrôle de trajectoire d'un véhicule, comprenant des étapes d'élaboration en temps réel d'une consigne d'action stabilisante applicable sur le véhicule en multipliant un vecteur d'état du véhicule par un gain à chaque instant d'échantillonnage et de production du gain adapté en temps réel à une plage de vitesse à laquelle appartient la vitesse du véhicule et au vecteur d'état en minimisant une somme d'au moins deux carrés d'écart de trajectoire déduit du vecteur d'état.

Avantageusement, les étapes de production du gain comprennent des étapes de linéarisation au moins d'une matrice d'état en fonction au moins de la vitesse du véhicule, exécutées en temps réel ou préalablement hors ligne.

Particulièrement, les étapes de linéarisation comprennent des étapes de linéarisation d'au moins un vecteur d'influence en fonction au moins de la vitesse du véhicule.

Particulièrement aussi, les étapes de linéarisation comprennent des étapes de linéarisation d'au moins un vecteur d'influence et/ou de la matrice d'état en fonction d'au moins une rigidité de dérive de roue du véhicule.

Particulièrement encore, les étapes de linéarisation comportent des étapes d'encadrement du ou des vecteurs d'influence et/ou de la matrice d'état en relation avec au moins la vitesse du véhicule.

Plus particulièrement, les étapes de linéarisation se combinent aux étapes d'encadrement du ou des vecteurs d'influence et/ou de la matrice d'état en relation avec la ou les rigidités de dérive de roue du véhicule.

Avantageusement aussi, les étapes de production du gain comprennent des étapes d'optimisation convexe par inégalités matricielles linéaires exécutées en temps réel ou préalablement hors ligne pour minimiser ladite somme d'au moins deux carrés d'écarts de trajectoire déduits du vecteur d'état.

Particulièrement, les étapes d'optimisation convexe comprennent des étapes de maintien d'angles de dérive et/ou des angles de braquage des roues en dessous de limites maximales prescrites.

L'invention a encore pour objet un programme d'ordinateur comprenant des instructions de code de programme pour l'exécution des étapes du procédé selon l'invention lorsque ledit programme est exécuté sur un ordinateur.

La solution de l'invention présente plusieurs avantages.

La loi de commande est particulièrement robuste face aux évolutions de vitesses et d'adhérence de la route.

La loi de commande en boucle fermée est stable pour une plage de valeurs des paramètres de réglage qui varient en temps réel.

La loi de commande est optimisée pour assurer un dépassement latéral minimal par rapport à la position initiale du véhicule sur la voie de circulation pendant le régime transitoire vers le centre de la voie.

D'autres caractéristiques et avantages apparaîtront à la lecture de la description qui suit, en référence aux dessins annexés dans lesquels :

- la figure 1 représente un véhicule auquel l'invention est applicable,
- la figure 2 est un schéma de dispositif conforme à l'invention,
- la figure 3 est un schéma de modélisation du parcours du véhicule,
- la figure 4 est une courbe de variation d'adhérence en fonction d'un angle de dérive des pneus,
- les figures 5 à 8 montrent des schémas de module conforme à l'invention pour élaborer un gain de retour d'état.

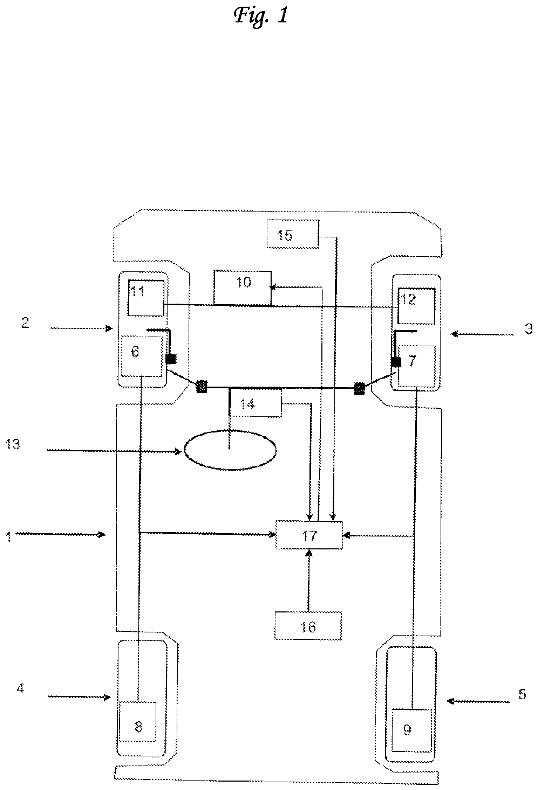

En référence à la figure 1, un véhicule 1 automobile, à traction entraîné par un moteur (non représenté sur les figures), comporte quatre roues comprenant une roue avant gauche 2, une roue avant droite 3, une roue arrière gauche 4 et une roue arrière droite 5. Chaque roue 2, 3, 4, 5 est équipée ou non respectivement d'un capteur de vitesse instantanée 6, 7, 8, 9 permettant de mesurer les vitesses des roues 2 à 5.

Un dispositif de freinage 10 capable de générer une pression de freinage différente dans les étriers de freins avant gauche 11 et droit 12, est utile pour appliquer un moment de lacet $T_{yaw}$ selon une variante de mise en oeuvre de l'invention. Le dispositif de freinage 10 qui peut, par exemple, être un dispositif de type actionneur ESC (Electronic Stability Control), n'est pas nécessaire dans d'autres variantes de mise en oeuvre de l'invention.

Le véhicule 1 comporte un volant de direction 13 agissant sur une commande de direction qui permet d'orienter les roues avant 2 et 3. Le volant de direction 13 est équipé d'un capteur 14 de l'angle du volant de direction 13, permettant de mesurer l'angle du volant de direction 13 correspondant à un angle de braquage $\delta_f^d$ désiré des roues avant par le conducteur.

Le véhicule 1 comporte également un capteur 15 de la vitesse de lacet $\dot{\psi} = \partial\Psi / \partial t$ du véhicule, c'est-à-dire de la vitesse de rotation du véhicule autour de son centre de gravité suivant un axe vertical et un capteur de vitesse 16 du véhicule mesurant la vitesse v en translation du véhicule 1.

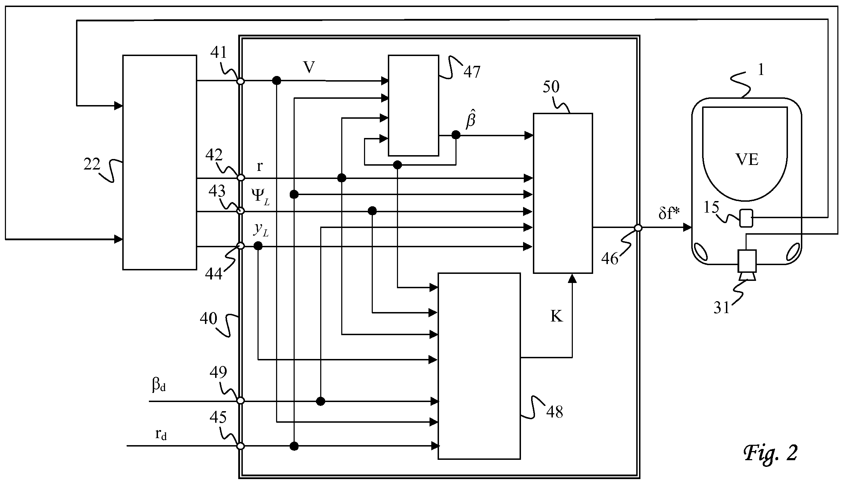

Le véhicule 1 est équipé d'un calculateur 17 permettant de contrôler et de commander différents éléments du véhicule. Le calculateur 17 peut recevoir par des connexions, notamment par un bus CAN, des informations, par exemple en provenance des capteurs de vitesse 6 à 9, du capteur 15 de vitesse de lacet et du capteur 14 de l'angle du volant de direction 13. Le calculateur 17 peut aussi commander le dispositif de freinage 10. Le calculateur 17 peut héberger en outre, un dispositif de contrôle 40 pour exécuter un procédé de contrôle/commande de la trajectoire du véhicule 1, expliqué à présent en référence à la figure 2.

Dans le mode de réalisation illustré par la figure 2, le dispositif de contrôle 40 comprend d'une part des entrées 41, 42, 43, 44 de réception d'une grandeur représentative totalement ou partiellement respectivement d'un écart $\beta$, $\partial\Psi / \partial t$, $\Psi_L$, $y_L$ entre une trajectoire de référence et une trajectoire effective du véhicule et d'autre part au moins une sortie 46 de production d'une consigne de braquage $\delta_f^*$ qui est appliquée aux roues avant 2, 3 du véhicule 1.

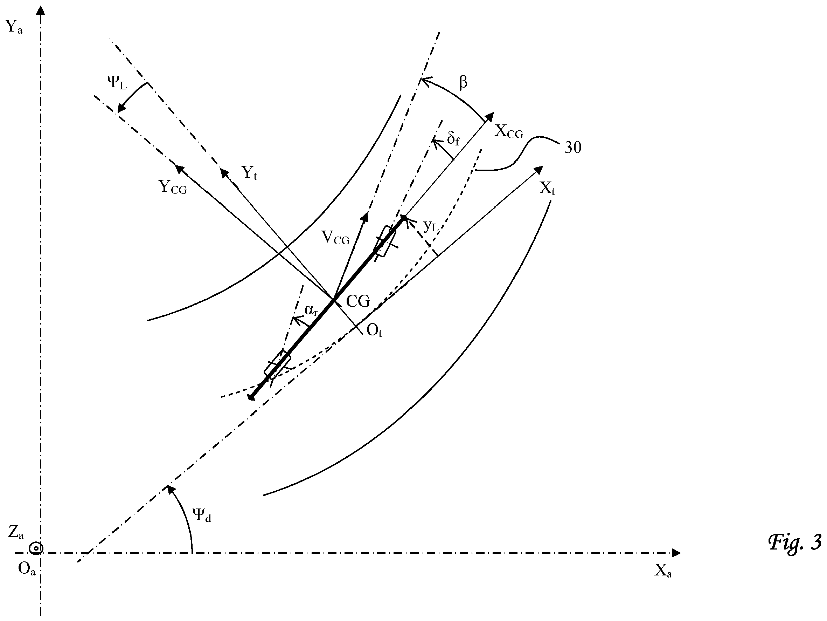

Avant de rentrer dans le détail de la structure et du fonctionnement du dispositif 40, on rappelle les lois comportementales du véhicule 1 sur une trajectoire 30 de référence représentée en pointillés sur la figure 3.

L'analyse du suivi de la trajectoire 30 par le véhicule 1 est abordée ici par un modèle bicyclette. De manière connue dans le domaine technique considéré, le modèle bicyclette assimile le véhicule 1 à une barre filiforme qui passe par le centre de gravité CG du véhicule et qui comporte le même moment d'inertie J autour d'un axe perpendiculaire au plan de la figure passant par le centre de gravité, et la même masse M que le véhicule.

La trajectoire 30 de référence est représentée dans un repère absolu $\{O_a, X_a, Y_a\}$. A chaque instant t, la position du véhicule est repérée par rapport à un point $O_t$ de la trajectoire qui constitue l'origine d'un repère relatif cinématique $\{O_t, X_t, Y_t\}$ dans lequel l'axe $X_t$ est tangent à la trajectoire au point $O_t$. L'axe $X_t$ fait un angle $\Psi_d$ avec l'axe $X_a$ du repère absolu. L'angle $\Psi_d$ est généralement nommé angle de cap visé dans le domaine technique auquel appartient l'invention.

Lorsque le véhicule suit parfaitement sa trajectoire à l'instant t, le centre de gravité CG est confondu avec le

point $O_t$ de la trajectoire 30. Ce n'est pas le cas lorsque le centre de gravité CG est déporté sur l'axe $Y_t$ qui est perpendiculaire à l'axe $X_t$ dans le plan de la figure 3.

Le centre de gravité CG constitue l'origine d'un repère relatif lié {CG, $X_{CG}$, $Y_{CG}$} au véhicule dans lequel l'axe $X_{CG}$ est colinéaire à la barre à laquelle le véhicule est assimilé dans le modèle bicyclette. Le repère relatif lié {CG, $X_{CG}$, $Y_{CG}$} fait un angle $\Psi_L$ avec le repère relatif cinématique {$O_t$, $X_t$, $Y_t$}. La valeur de l'angle $\Psi_L$ est nulle dans le cas idéal où le véhicule est dirigé selon la tangente à la trajectoire 30. Dans le cas contraire, une valeur non nulle de l'angle $\Psi_L$ constitue un écart de trajectoire.

Par rapport au repère absolu {$O_a$, $X_a$, $Y_a$}, le centre de gravité CG se déplace à une vitesse $V_{CG}$ dont le vecteur, exprimé dans le repère relatif lié {$O_t$, $X_{CG}$, $Y_{CG}$} fait un angle $\beta$ avec l'axe $X_{CG}$. Le vecteur de vitesse au centre de gravité comporte alors une composante v = $V_{CG} \cdot \cos\beta$ selon l'axe $X_{CG}$ et une composante u = $V_{CG} \cdot \sin\beta$ selon l'axe $Y_{CG}$. La vitesse u correspond à une vitesse de ripage transversale au véhicule. La vitesse v correspond à une vitesse longitudinale du véhicule égale à la vitesse $V_{CG}$ en absence de ripage. L'angle $\beta$ est généralement nommé angle de dérive qui, en absence de qualificatif supplémentaire, désigne plus précisément l'angle de dérive du véhicule dans son ensemble.

On rappelle que dans le domaine technique considéré, la vitesse de rotation du véhicule autour d'un axe $Z_a$ perpendiculaire au plan de la figure, est nommée vitesse de lacet. Dans le cadre des explications de l'invention qui suivent, la vitesse de lacet est désignée par la lettre r. La vitesse de lacet étant la dérivée par rapport au temps de l'angle de cap effectif $\Psi$ du véhicule, elle est définie par la formule :

$$r = \frac{\partial \Psi}{\partial t} = \frac{\partial \Psi_d}{\partial t} + \frac{\partial \Psi_L}{\partial t}$$

On a représenté sur la figure 3 l'angle de dérive $\alpha_r$ des pneus arrière qui représente l'angle que fait le vecteur de vitesse effective des roues arrière avec la vitesse longitudinale du véhicule. Pour ne pas surcharger la figure, on n'a pas représenté l'angle de dérive $\alpha_f$ des pneus avant qui représente de même l'angle que fait le vecteur de vitesse effective des roues avant avec la vitesse donnée par l'angle de braquage $\delta_f$.

Sur le modèle bicyclette illustré par la figure 3, les roues avant 2, 3 sont représentées par une roue unique avant qui fait un angle $\delta_f$ avec l'axe $X_{CG}$ à une distance $l_f$ du centre de gravité CG, distance non reportée sur la figure par souci de clarté. La roue unique avant présente une rigidité de dérive égale à la somme des rigidités de dérive $c_f$ de chacune des roues 2, 3, généralement de valeurs identiques obtenues auprès du fournisseur de pneumatique des roues ou au moyen d'essais de roulage sur circuit.

De même, les roues arrière 4, 5 sont représentées par une roue unique arrière dans l'axe $X_{CG}$ à une distance $l_r$ du centre de gravité CG, distance ici encore non reportée sur la figure par souci de clarté. La roue unique arrière présente aussi une rigidité de dérive égale à la somme des rigidités de dérive $c_r$ de chacune des roues 4, 5, généralement de valeurs identiques obtenues également auprès du fournisseur de pneumatique des roues ou au moyen d'essais de roulage sur circuit.

Lorsque l'angle de braquage $\delta_f$ est de valeur nulle, la variation $\dot{\beta}$ de l'angle de dérive et la variation $\dot{r}$ de la vitesse de lacet obéissent aux lois de la dynamique sans perturbations que l'on rappelle ci-dessous en considérant des angles de dérives faibles :

$$\dot{\beta} = -\frac{2(c_r + c_f)}{Mv}\beta - \left(1 - \frac{2(l_r c_r - l_f c_f)}{Mv^2}\right)r$$

$$\dot{r} = -\frac{2(l_r c_r - l_f c_f)}{J}\beta - \left(\frac{2(l_r^2 c_r - l_f^2 c_f)}{Jv}\right)r$$

Dans la formule de définition de la vitesse de lacet qui est donnée ci-dessus, la variation de l'angle de cap peut aussi s'exprimer de la manière suivante en fonction de la courbure $\rho_{ref}$ de la trajectoire 30 de référence, la courbure $\rho_{ref}$ étant égale à l'inverse du rayon de courbure R au point $O_t$ à chaque instant t.

$$\frac{\partial \Psi_d}{\partial t} = v \cdot \rho_{ref}$$

De la sorte, pour une trajectoire rectiligne uniforme, on obtient :

$$\partial\Psi_L\big/\partial t = r$$

Dans le modèle bicyclette de la figure 3 qui représente le véhicule 1, on considère l'écart $y_L$ entre l'axe $X_t$ et l'axe $X_{CG}$ mesurable sur un front du véhicule à une distance $l_s$ en avant du centre de gravité CG.

On note que l'écart est généralement nul lorsque le véhicule suit parfaitement sa trajectoire, notamment lorsque le déport transversal du centre de gravité CG et l'angle de dérive β sont de valeur nulle ou se compensent. Il existe aussi des cas dans lesquels le véhicule suit parfaitement sa trajectoire avec un écart latéral non nul en avant du véhicule en raison de la courbure de la trajectoire de référence.

On constate sur le schéma de la figure 3 qu'une variation d'écart d'axe $\dot{y}_L = \partial y_L\big/\partial t$ vérifie l'équation géométrique suivante :

$$\dot{y}_L = v \cdot \left(\tan\beta + \tan\Psi_L\right) + l_s \cdot r$$

Lorsque les angles β et $\Psi_L$ sont petits, l'équation géométrique ci-dessus peut encore s'écrire :

$$\dot{y}_L = v \cdot \beta + l_s \cdot r + v \cdot \Psi_L$$

La mise en oeuvre de l'invention considère un vecteur d'état x défini de la manière suivante en utilisant la convention d'écriture du langage matriciel pour laquelle la lettre T portée en exposant d'un vecteur ou d'une matrice, désigne la transposée de ce vecteur ou de cette matrice :

$$\left(\beta,\ r,\ \beta_d,\ r_d,\ \Psi_L,\ y_L\right)^T = x$$

Dans le vecteur d'état x, la variable $\beta_d$ représente l'angle de dérive désiré et la variable $r_d$ représente la vitesse de lacet désirée. L'angle de dérive désiré $\beta_d$ et la vitesse de lacet désirée sont reçues par le dispositif 40 respectivement sur les entrées 49 et 45. Généralement l'angle de dérive désiré $\beta_d$, en d'autres termes l'angle que fait le vecteur de vitesse du véhicule avec son axe longitudinal, est idéalement nul pour correspondre à une absence de dérapage du véhicule. Cependant, certains cas de pilotage particuliers peuvent appeler un angle de dérive désiré $\beta_d$ non nul, par exemple pour augmenter l'adhérence des pneus dans un virage.

Un véhicule bien maitrisé a de préférence une dynamique de lacet qui suit parfaitement le souhait de son conducteur exprimé par la consigne d'angle de braquage $\delta_f^d$ des roues avant. Cette dynamique parfaite peut être décrite par une fonction de transfert du $1^{er}$ ordre donné dans l'équation ci-dessous :

$$\begin{pmatrix}\dot{\beta}_d \\ \dot{r}_d\end{pmatrix} = \begin{pmatrix}0 & 0 \\ 0 & \dfrac{-1}{T_e}\end{pmatrix}\begin{pmatrix}\beta_d \\ r_d\end{pmatrix} + \begin{pmatrix}0 \\ \dfrac{K_d}{T_e}\end{pmatrix}\delta_f^d$$

Dans cette équation, la constante $K_d$ représente le gain statique entre l'angle de braquage $\delta_f^d$ commandé par le conducteur et la vitesse de lacet $r_d$. La constante $T_e$ est un paramètre de calibration qui décrit le temps de réponse pour arriver à l'état stationnaire.

La valeur maximale de vitesse de rotation en lacet est contrainte par l'adhérence de la route μ, nombre adimensionnel égal au rapport de la force de frottement dans le plan de la route sur la force perpendiculaire au plan de la route telles qu'elles sont exercées sur la surface de contact entre la route et le pneu. La valeur maximale absolue de la vitesse de lacet est donnée par :

$$r_d^{\max} = 0.85 \frac{\mu \cdot g}{v}$$

Les lois physiques expliquées ci-dessus pour évaluer le comportement du véhicule sur sa trajectoire, peuvent être synthétisées au moyen d'une matrice A d'évolution d'état ci-dessous définie.

$$A = \begin{pmatrix} -2\dfrac{c_r + c_f}{mv} & -1 + 2\dfrac{(l_r c_r - l_f c_f)}{mv^2} & 0 & 0 & 0 & 0 \\ 2\dfrac{(l_r c_r - l_f c_f)}{J} & -2\dfrac{(l_r^2 c_r + l_f^2 c_f)}{Jv} & 0 & 0 & 0 & 0 \\ 0 & 0 & 0 & 0 & 0 & 0 \\ 0 & 0 & 0 & \dfrac{-1}{T_e} & 0 & 0 \\ 0 & 1 & 0 & 0 & 0 & 0 \\ v & l_s & 0 & 0 & v & 0 \end{pmatrix}$$

On note que les paramètres qui interviennent dans la matrice A d'évolution d'état, sont constants lors d'un même déplacement du véhicule à l'exception du paramètre de vitesse v et des rigidités de dérive qui, comme nous le verrons par la suite, peuvent varier en fonction de l'angle de dérive des pneus.

En absence de perturbations extérieures, le vecteur d'état x évolue alors dans le temps de la manière suivante sur une trajectoire rectiligne :

$$\dot{x} = Ax$$

Lorsque la trajectoire 30 n'est pas rectiligne, la courbure $\rho_{ref}$ introduit un vecteur $B_\rho$ de perturbation sur la variation x du vecteur d'état telle que :

$$\dot{x} = Ax + B_\rho \rho_{ref}$$

Avec

$$B_\rho = (0,0,0,0,-v,0)^T$$

D'autres actions extérieures au système de maintien du véhicule sur sa trajectoire, volontaires ou non, sont considérées comme des perturbations qui peuvent ou non se compenser les unes les autres.

Ainsi par exemple, le braquage des roues avant commandé par le conducteur, notamment pour se conformer à la courbure de trajectoire, introduit aussi un vecteur $B_{fd}$ de perturbation qui intervient sur l'évolution temporelle du vecteur d'état x proportionnellement à l'angle de braquage $\delta_f^d$ des roues avant piloté à partir du volant entre les mains du conducteur, voire par un système de pilotage automatique, l'un comme l'autre hors du cadre de l'invention.

$$\dot{\mathbf{x}} = \mathbf{A}\mathbf{x} + \mathbf{B}_{f_d}\delta_f^{\,d}$$

D'autres perturbations, plus aléatoires et plus difficilement mesurables, peuvent aussi intervenir comme par exemple, une rafale de vents transversaux ou une discontinuité d'adhérence de la chaussée due par exemple à une plaque de verglas.

Maintenant que nous avons expliqué, parmi les lois physiques qui régissent le comportement du véhicule par rapport à la trajectoire de référence 30, celles considérées essentielles dans le cadre de l'invention, nous allons expliquer comment l'invention intervient sur le vecteur d'état x pour l'amener et le maintenir de manière stable à des valeurs qui correspondent à un maintien du véhicule sur sa trajectoire.

Le dispositif 40 comprend un module 50 agencé pour élaborer en temps réel une consigne stabilisante $\delta_f^*$. En

d'autres termes, la consigne $\delta_f^*$ cherche à obtenir un vecteur d'état x qui traduit un suivi parfait de la trajectoire de référence 30 de manière constante.

Le dispositif 40, en contrôlant et commandant l'angle de braquage des roues avant par la consigne $\delta_f^*$ selon le mode de mise en oeuvre expliqué à présent, impose un angle de braquage $\delta_f$ qui intervient sur la variation $\dot{x} = \frac{dx}{dt}$ du vecteur d'état x en ajoutant le produit de l'angle de braquage par un vecteur $B_\delta$ d'influence de braquage au produit de la matrice d'état A par le vecteur d'état x :

$$\dot{x} = Ax + B_\delta \delta_f$$

Où le vecteur $B_\delta$ d'influence de braquage $B_\delta$ a pour expression :

$$B_\delta = \begin{pmatrix} \dfrac{2c_f}{mv} \\ \dfrac{2l_f c_f}{J} \\ 0 \\ 0 \\ 0 \\ 0 \end{pmatrix}$$

Si un pilotage autonome guide le véhicule en absence de conducteur, la dynamique désirée du véhicule sera celle imposée par l'angle $\delta_f$. L'influence du braquage sera alors exprimée au moyen de la somme des vecteurs d'influence $B_\delta$ et $B_{fd}$.

$$\dot{x} = Ax + (B_\delta + B_{fd})\delta_f$$

Pour ce faire, le module 50 reçoit à chaque instant d'échantillonnage d'ordre k, la valeur d'au moins une, et de préférence de chacune des valeurs des variables d'état du vecteur d'état x, de façon à contrôler des écarts $\beta - \beta_d$, $r - r_d$, $\Psi_L$ et $y_L$.

Pour mesurer ou estimer les valeurs des variables d'état, le véhicule 1 comprend une caméra 31 en plus du capteur 15. La caméra 31 est disposée à l'avant du véhicule, par exemple au niveau du rétroviseur central pour capturer des images de la route à l'avant du véhicule et en déduire au moyen d'un logiciel de traitement d'images, la position du véhicule sur la route. La caméra 31 est particulièrement utile pour mesurer l'écart transversal $y_L$. Le capteur 15, de préférence sous forme de gyroscope, délivre en temps réel la vitesse de lacet r du véhicule dans le repère fixe {$O_a$, $X_a$, $Y_a$}. D'autre part, l'angle $\Psi_L$ peut être obtenu mais non nécessairement au moyen d'un compas électronique de type connu ou au moyen d'algorithmes de traitement d'image semblables à ceux utilisés pour estimer l'écart latéral $y_L$.

Un bloc d'entrée 22 reçoit les signaux en provenance des capteurs 6 à 9, 14 à 15 et 31, et notamment la vitesse du véhicule V, la vitesse de lacet $r = \dot{\psi}$ et l'angle de roues avant $\delta_f$. La vitesse du véhicule peut être obtenue en faisant la moyenne de la vitesse des roues avant et/ou des roues arrière telle que mesurée par les capteurs d'un système antiblocage de roues comme on le comprend à l'éclairage de la figure 1. Le bloc 22 transmet la vitesse de lacet r sur l'entrée 42, la valeur de l'écart d'angle $\Psi_L$ sur l'entrée 43 et la valeur de l'écart $y_L$ sur l'entrée 44, valeurs qui sont communiquées en temps réel au module 50. Si le bloc 22 dispose de moyens pour estimer l'angle de dérive $\beta$, la valeur de l'angle de dérive est transmise sur l'entrée 41 pour être communiquée directement au module 50. Pour les cas où le bloc 22 ne dispose pas de moyens pour estimer l'angle de dérive $\beta$, le dispositif 40 peut comprendre un module 47 qui estime l'angle de dérive $\beta$ à partir de la vitesse v du véhicule transmise alors sur l'entrée 41, de l'angle de braquage des roues avant en fonction de la vitesse de lacer désirée $r_d$ transmise sur l'entrée 45 et de la vitesse de lacet r effective déjà reçue sur l'entrée 42. Le module 47 génère alors un angle de dérive estimé $\hat{\beta}$ à destination du module 50, en utilisant par exemple mais non nécessairement l'observateur d'état enseigné par le brevet EP1544080B1.

Le module 50 élabore la consigne $\delta_f^*$ en multipliant au moins l'écart $\Psi_L$ et/ou $y_L$ respectivement par un facteur

de gain $k_\Psi$, $k_y$ en vue de l'exploiter dans le braquage des roues avant pour annuler chaque écart traité.

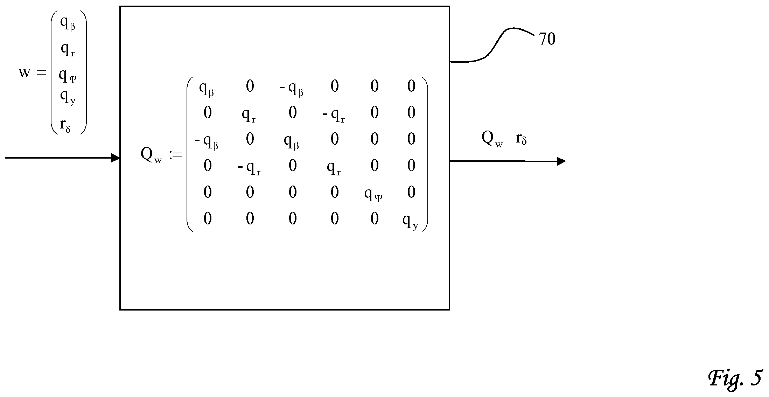

De préférence, le module 50 reçoit au moins un vecteur de gain K de dimension égale à celle du vecteur d'état x en provenance d'un module 48 dont nous expliquerons plus loin l'agencement et le fonctionnement en référence aux figures 5 à 7.

$$K=[\ k_\beta,\ -\ k_\beta,\ k_r,\ -k_r,\ k_\Psi,\ k_y\ ]$$

De façon plus générale, K peut être écrit comme suit :

$$K=[\ k_\beta,\ k_{\beta d},\ k_r,\ k_{rd},\ k_\Psi,\ k_y\ ]$$

Le module 50 élabore alors la consigne $\delta_f{}^*$ en effectuant le produit scalaire du vecteur de gain K par le vecteur d'état x.

$$\delta_f{}^* = K\cdot x = k_\beta(\hat{\beta}-\beta_d)\ +k_r(r-r_d)\ +k_\Psi\Psi_L\ +k_y y_L,$$

ou de façon plus générale

$$\delta_f{}^* = K\cdot x = k_\beta\hat{\beta}\ +\ k_{\beta d}\beta_d\ +k_r r\ +k_{rd}r_d\ +k_\Psi\Psi_L\ +k_y y_L.$$

Ainsi, la consigne $\delta_f{}^*$ varie linéairement par rapport à au moins un écart $(\hat{\beta}-\beta_d)$, $(r-r_d)$, $\Psi_L$, $y_L$ avec un coefficient de proportionnalité $k_\beta$, $k_r$, $k_\Psi$, $k_y$. Le ou les coefficients de proportionnalité sont déterminés en temps réel par le module 48 de façon à optimiser la manière de varier de la consigne stabilisante $\delta_f{}^*$ comme nous le voyons à présent.

Le module 48 génère en temps réel à chaque instant d'échantillonnage k, des valeurs du gain K en recherchant à minimiser une fonction de coût $J_\infty(k)$ définie par la formule :

$$J_\infty(k) = \sum_{t=0}^{\infty}\left[(\beta-\beta_d)_{k+t}^2 q_{\beta,t} + (r-r_d)_{k+t}^2 q_{r,t} + \Psi_{L,k+t}^2 q_{\Psi,t} + y_{L,k+t}^2 q_{\Psi,t}\right] + \delta_f{}^2 r_{\delta,t}$$

La fonction de coût $J_\infty(k)$ définie ci-dessus, permet d'obtenir une optimisation prédictive sur l'ensemble des états du véhicule relatifs à sa trajectoire comprenant l'état du véhicule à l'instant courant d'échantillonnage d'indice k et, en l'absence de perturbations extérieures, les états qui lui succèdent à différents instants ultérieurs tT où T est la période d'échantillonnage.

Dans la fonction de coût, le carré de chaque écart $(\beta-\beta_d)_{k+t}^2$, $(r-r_d)_{k+t}^2$, $(\Psi_L)_{k+t}^2$, $(y_L)_{k+t}^2$, est pondéré respectivement par un coefficient $q_{\beta,t}$, $q_{r,t}$, $q_{\Psi,t}$, $q_{y,t}$. De même la contribution de la commande donnée par la consigne $\delta_f$ d'angle de braquage des roues avant, est pondérée par un coefficient $r_{\delta,t}$. Les coefficients de pondération sont des paramètres ajustables en phase préalable de mise au point puis mémorisés de manière permanente dans le module 48 au moyen d'une structure de données 70 expliquée maintenant en référence à la figure 5.

A titre purement illustratif et non exhaustif, on peut citer le cas très particulier d'un réglage effectué lors d'un essai ayant conduit aux valeurs $q_\beta = 100$, $q_r = 10$ $q_\Psi = 100$ $q_y = 1$ et $r_\delta =10$. On comprendra que des valeurs appropriées à un type de véhicule donné ne le sont pas nécessairement à un autre type de véhicule. Il en est de même pour un type de comportement du véhicule souhaité par rapport à un autre. Les coefficients de pondération sont modifiables dans de larges proportions avant mise sur le marché du véhicule, de façon à laisser toute liberté au pilote d'essai pour régler la loi de commande au mieux en fonction de son expérience et des performances attendues en accordant plus ou moins de poids à un écart qu'à un autre.

La structure de données 70 est agencée pour générer une matrice de pondération $Q_w$ et un facteur de pondération $r_\delta$ à partir d'une suite w de cinq valeurs fixées de paramètre $q_\beta$, $q_r$, $q_\Psi$, $q_y$, et $r_\delta$.

De préférence, la matrice de pondération $Q_w$ est de la forme suivante :

$$Q_w := \begin{pmatrix} q_\beta & 0 & -q_\beta & 0 & 0 & 0 \\ 0 & q_r & 0 & -q_r & 0 & 0 \\ -q_\beta & 0 & q_\beta & 0 & 0 & 0 \\ 0 & -q_r & 0 & q_r & 0 & 0 \\ 0 & 0 & 0 & 0 & q_\Psi & 0 \\ 0 & 0 & 0 & 0 & 0 & q_y \end{pmatrix}$$

De la sorte, en prenant les coefficients de pondération $q_{\beta,0}$, $q_{r,0}$, $q_{\Psi,0}$, $q_{y,0}$, $r_{\delta,0}$ égaux respectivement à $q_\beta$, $q_r$, $q_\Psi$, $q_y$, $r_\delta$ et les coefficients de pondération $q_{\beta,t}$, $q_{r,t}$, $q_{\Psi,t}$, $q_{y,t}$. $r_{\delta,t}$ égaux à zéro pour les valeurs de t supérieures à zéro, la fonction de coût est telle que :

$$J_\infty(k) = \left[(\beta - \beta_d), (r - r_d), \Psi_L, y_L\right] Q_w \left[(\beta - \beta_d), (r - r_d), \Psi_L, y_L\right]^T + \delta_f^{\ 2} r_{\delta,t}$$

De même, il est possible de prendre les coefficients de pondération $q_{\beta,t}$, $q_{r,t}$, $q_{\Psi,t}$, $q_{y,t}$. $r_{\delta,t}$ égaux à $q_\beta$, $q_r$, $q_\Psi$, $q_y$, $r_\delta$ pour toutes les valeurs de t supérieures ou égales à zéro. Dans ce cas la fonction de coût est telle que :

$$\mathbf{J}_\infty(\mathbf{k}) = \sum_{t=0}^{\infty} \left[ (\boldsymbol{\beta} - \boldsymbol{\beta_d})_{\mathbf{k+t}}^2 \mathbf{q}_\beta + (\mathbf{r} - \mathbf{r_d})_{\mathbf{k+t}}^2 \mathbf{q_r} + \boldsymbol{\Psi}_{\mathbf{L,k+t}}^2 \mathbf{q}_\Psi + y_{\mathbf{L,k+t}}^2 \mathbf{q}_\Psi \right] + \boldsymbol{\delta_f}^2 \mathbf{r}_\delta$$

Le module 48 comprend aussi un bloc d'amorçage 80 contenant des données indépendantes de la vitesse v du véhicule et un bloc d'allure 81 contenant des données liées à la vitesse v du véhicule.

Le bloc d'amorçage 80 est activé notamment à l'initialisation des étapes de procédé exécutées par le module 48.

Les données contenues dans le bloc d'amorçage 80 comprennent la matrice de pondération $Q_w$ et le facteur de pondération $r_\delta$. Les données contenues dans le bloc d'amorçage 80 comprennent aussi une matrice $A_0$ et un vecteur $B_0$ dont les expressions sont les suivantes :

$$A_0 = \begin{pmatrix} 0 & -1 & 0 & 0 & 0 & 0 \\ 0 & 0 & 0 & 0 & 0 & 0 \\ 0 & 0 & 0 & 0 & 0 & 0 \\ 0 & 0 & 0 & \dfrac{-1}{T_e} & 0 & 0 \\ 0 & 1 & 0 & 0 & 0 & 0 \\ 0 & l_s & 0 & 0 & 0 & 0 \end{pmatrix} \qquad B_0 = \begin{pmatrix} 0 \\ 0 \\ 0 \\ 0 \\ 0 \\ 0 \end{pmatrix}$$

On comprendra à ce stade et dans la suite de la description que des valeurs nulles n'ont pas nécessité de réserver une cellule mémoire du dispositif 40 pour leur stockage, celles-ci étant ici indiquées essentiellement pour faciliter la compréhension des explications.

Le bloc d'allure 81 est activé notamment à chaque itération des étapes de procédé exécutées par le module 48.

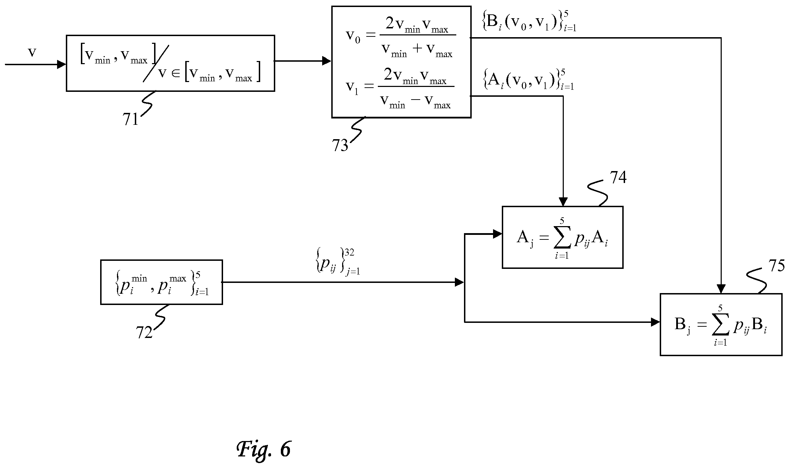

Le bloc d'allure 81 délivre $2^n$, soit trente deux matrices $A_j$ et trente deux matrices $B_j$ lorsque n=5. La figure 6 illustre un exemple de réalisation possible dans lequel le bloc d'allure 81 comporte tout ou partie des sous blocs 71 à 75 qui expliquent comment les matrices $A_j$ et $B_j$ sont générées, j variant de 1 à $2^n$.

Le sous bloc 71 détermine au moins une plage de vitesses comprise entre une valeur minimale $v_{min}$ et une valeur maximale $v_{max}$ pour laquelle le gain K est valide.

Lorsque la vitesse v du véhicule reçue en entrée du sous bloc 71, n'appartient à aucune plage de vitesses, l'action du dispositif 40 est inhibée et l'angle de braquage des roues résulte uniquement de l'action exercée par le conducteur sur la colonne de direction du véhicule.

Lorsque la vitesse v du véhicule reçue en entrée du sous bloc 71, appartient à la ou à l'une de plusieurs plages de vitesses, le sous bloc 71 communique au sous bloc 73 les valeurs $v_{min}$ et $v_{max}$ qui correspondent à la plage de vitesse à laquelle appartient la vitesse v du véhicule.

Le sous bloc 73 associe à la vitesse v du véhicule, deux composantes de vitesse $v_0$ et $v_1$ définies de la manière suivante :

$$v_0 = \frac{2v_{min}v_{max}}{v_{min} + v_{max}}$$

$$v_1 = \frac{2v_{min}v_{max}}{v_{min} - v_{max}}$$

Ainsi la vitesse v du véhicule est liée aux composantes de vitesse $v_0$ et $v_1$ par la relation : $\dfrac{1}{v} = \dfrac{1}{v_0} + \dfrac{1}{v_1}\xi_v$ dans laquelle le coefficient de proportionnalité $\xi_v \in$ [-1,+1].

La valeur absolue du coefficient de proportionnalité $\xi_v$ étant inférieure à l'unité, il en résulte que :

$$\frac{1}{v^2} \approx \frac{1}{v_0^2} + \frac{2}{v_0 v_1}\xi_v$$

De cette façon, le sous bloc 73 constitue un moyen d'exprimer sous forme linéaire l'inverse de la vitesse et le carré de l'inverse de la vitesse qui interviennent dans les équations d'état, notamment dans la matrice d'état A.

Le sous-bloc 72 contient un ensemble de n bornes inférieures $p_i^{min}$ et de n bornes supérieures $p_i^{max}$ relatives respectivement à n variables comportementales $p_i$. Les n variables comportementales $p_i$, i variant de 1 à n, comprennent notamment :

- une variable $p_1$ égale au quantificateur de saturation $\zeta_f$ relatif aux roues avant 2, 3 ;

- une variable $p_2$ égale au quantificateur de saturation $\zeta_r$ relatif aux roues arrière 4, 5 ;

- une variable $p_3$ égale au produit du coefficient de proportionnalité $\xi_v$ par le quantificateur de saturation $\zeta_f$ relatif aux roues avant 2, 3 ;

- une variable $p_4$ égale au produit du coefficient de proportionnalité $\xi_v$ par le quantificateur de saturation $\zeta_r$ relatif aux roues arrière 4, 5 ;

- une variable $p_5$ égale au coefficient de proportionnalité $\xi_v$.

De manière connue, le quantificateur de saturation $\zeta$ que ce soit $\zeta_r$ pour les roues arrière ou $\zeta_f$ pour les roues avant, prend des valeurs qui varient en fonction du coefficient d'adhérence $\mu$ de la route et de l'angle de dérive $\alpha$ des roues, plus précisément des pneus sur leur surface de contact avec la route.

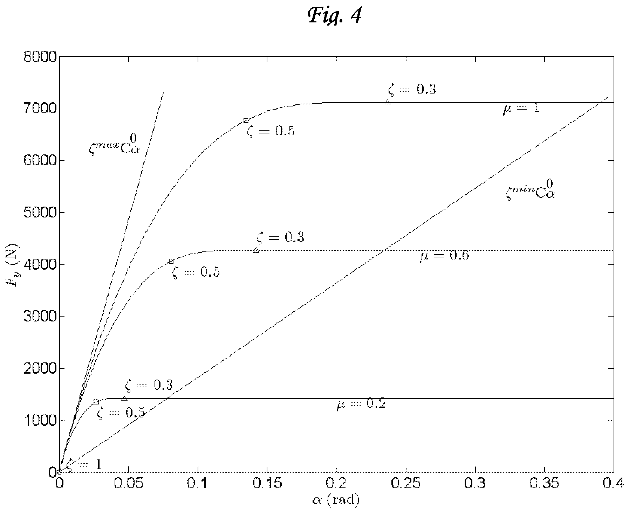

La figure 4 permet de mieux comprendre la signification du quantificateur de saturation $\zeta$. Le graphe de la figure 4 porte en abscisse l'angle de dérive $\alpha$ qui évolue de 0 à 0,4 rad et en ordonnée la force de contact latérale $F_y$ exercée par la route sur la surface du pneu en contact, variant de 0 à un peu plus de 7000 N.

Aux différentes valeurs du coefficient d'adhérence $\mu$ correspondent différentes courbes parmi lesquelles trois courbes sont représentées correspondant chacune respectivement au coefficient d'adhérence $\mu$ = 0,2 surmontée par celle de coefficient d'adhérence $\mu$ = 0,6 elle même surmontée par celle de coefficient d'adhérence $\mu$ = 1. On conçoit aisément que la force de contact latérale $F_y$ est d'autant plus élevée que le coefficient d'adhérence $\mu$ est élevé.

On constate que pour les faibles valeurs de l'angle de dérive $\alpha$, la force de contact latérale croît linéairement rapidement en fonction de l'angle de dérive $\alpha$ en suivant une droite de coefficient directeur $c^0$ indépendamment du coefficient d'adhérence $\mu$.

Lorsque l'angle de dérive $\alpha$ augmente, la courbe s'écarte progressivement de la droite et ceci d'autant plus rapidement qu'elle est relative à un coefficient d'adhérence $\mu$ bas.

Lorsque l'angle de dérive $\alpha$ augmente encore, la courbe cesse d'augmenter et ceci d'autant plus tôt qu'elle est relative à un coefficient d'adhérence $\mu$ bas.

En considérant la rigidité de dérive d'une roue donnée par le rapport $c=F_y/\alpha$, on constate que la rigidité de dérive c diminue lorsque l'angle $\alpha$ augmente et ceci dans un rapport quantifié par $\zeta=c/c^0$ qui diminue le long de la courbe en partant d'une valeur unitaire $\zeta^{max}$ lorsque l'angle $\alpha$ est nul, correspondant à une absence de saturation des pneus, pour tendre vers une valeur minimale $\zeta^{min}$ lorsque l'angle $\alpha$ atteint une valeur correspondant à une saturation forte des pneus pour un coefficient d'adhérence $\mu$ donné de la route. Ainsi, le quantificateur de saturation est compris entre une valeur minimale $\zeta^{min}$ positive pour une saturation forte et entre une valeur maximale $\zeta^{max}=1$ pour une saturation faible.

La rigidité de dérive $c_f$ pour les roues avant est égale à ou différente d'une même valeur de rigidité de dérive c que la rigidité de dérive $c_r$ pour les roues arrière selon que la nature des pneus et de la route induit un même coefficient directeur $c^0_f$ pour les roues avant que $c^0_r$ pour les roues arrière et/ou que l'angle de dérive induit un même quantificateur de saturation $\zeta_f$ pour les roues avant que $\zeta_r$ pour les roues arrière.

Il résulte des explications qui précèdent que le sous bloc 72 contient les bornes suivantes relatives aux variables comportementales $p_1$, à $p_5$ :

$$[\, p_1^{min} \; ; \; p_1^{max} \,] = [\, \zeta_f^{min} \; ; \; \zeta_f^{max} = 1 \,]$$

$$[\, p_2^{min} \; ; \; p_2^{max} \,] = [\, \zeta_r^{min} \; ; \; \zeta_r^{max} = 1 \,]$$

$$[\, p_3^{min} \; ; \; p_3^{max} \,] = [-1 \; ; \; +1\,]$$

$$[\, p_4^{min} \; ; \; p_4^{max} \,] = [-1 \; ; \; +1\,]$$

$$[\, p_5^{min} \; ; \; p_5^{max} \,] = [-1 \; ; \; +1\,]$$

La linéarisation obtenue par l'introduction des variables comportementales $p_1$, à $p_5$, permet au sous bloc 72 d'exécuter au moyen d'instructions de programme informatique lisibles par un ordinateur, une étape de procédé consistant à générer un ensemble $\left\{ p_{ij} \right\}_{j=1}^{32}$ de $2^5$ quintuplés $\left\{ p_{ij} \right\}_{i=1}^{5}$ qui délimitent de manière connue un polytope régulier à l'intérieur duquel se trouvent toutes les combinaisons possibles de valeurs des variables comportementales $p_1$, à $p_5$. On rappelle que toute solution de combinaison linéaire vérifiée sur les frontières du polytope est vérifiée à l'intérieur du polytope.

L'ensemble de quintuplés, ou plus généralement de n-uplets, ci-dessus exposé, constitue un moyen du bloc 81 pour ramener à un nombre limité de constantes, à savoir les bornes minimales et maximales des variables comportementales, l'ensemble des variations possibles des dites variables comportementales.

En évitant d'avoir à traiter les variations des variables comportementales, ce moyen du bloc 81 diminue la quantité de calculs à effectuer et facilite ainsi considérablement l'optimisation en temps réel du gain K. Comme on le verra par la suite, 2n valeurs mémorisées, à savoir dix valeurs mémorisées dans le sous-bloc 72 en référence à l'exemple de mise en oeuvre illustré par la figure 6, évite d'avoir à traiter, à mesurer ou à estimer les valeurs en temps réel notamment de l'angle de dérive des roues et de la vitesse du véhicule en relation ou non avec l'angle de dérive des roues.

Le sous bloc 72 est connecté aux sous blocs 74 et 75 pour leur transmettre l'ensemble de n-uplets généré.

D'autre part le sous bloc 73 permet d'exécuter au moyen d'instructions de programme informatique lisibles par un ordinateur, une étape de procédé consistant à générer un ensemble $\left\{ A_i(v_0,v_1) \right\}_{i=1}^{5}$ et un ensemble $\left\{ B_i(v_0,v_1) \right\}_{i=1}^{5}$ comprenant chacun n, de préférence cinq matrices à valeurs constantes dans la plage de vitesses à laquelle appartient la vitesse v du véhicule à l'instant k d'échantillonnage. Les matrices d'un premier mode de réalisation ont par exemple les formes suivantes :

$$A_1 = \begin{pmatrix} -2\dfrac{c_f^0}{mv_0} & -2\dfrac{l_f c_f^0}{mv_0^2} & 0 & 0 & 0 & 0 \\[2mm] -2\dfrac{l_f c_f^0}{J} & -2\dfrac{l_f^2 c_f^0}{Jv_0} & 0 & 0 & 0 & 0 \\[2mm] 0 & 0 & 0 & 0 & 0 & 0 \\[1mm] 0 & 0 & 0 & 0 & 0 & 0 \\[1mm] 0 & 0 & 0 & 0 & 0 & 0 \\[1mm] 0 & 0 & 0 & 0 & 0 & 0 \end{pmatrix}$$

$$A_2 = \begin{pmatrix} -2\dfrac{c_r^0}{mv_0} & 2\dfrac{l_r c_r^0}{mv_0^2} & 0 & 0 & 0 & 0 \\[2mm] 2\dfrac{l_r c_r^0}{J} & -2\dfrac{l_r^2 c_r^0}{Jv_0} & 0 & 0 & 0 & 0 \\[2mm] 0 & 0 & 0 & 0 & 0 & 0 \\[1mm] 0 & 0 & 0 & 0 & 0 & 0 \\[1mm] 0 & 0 & 0 & 0 & 0 & 0 \\[1mm] 0 & 0 & 0 & 0 & 0 & 0 \end{pmatrix}$$

$$A_3 = \begin{pmatrix} -2\dfrac{c_f^0}{mv_1} & -4\dfrac{l_f c_f^0}{mv_0^3 v_1} & 0 & 0 & 0 & 0 \\[2mm] 0 & -2\dfrac{l_f^2 c_f^0}{Jv_1} & 0 & 0 & 0 & 0 \\[2mm] 0 & 0 & 0 & 0 & 0 & 0 \\[1mm] 0 & 0 & 0 & 0 & 0 & 0 \\[1mm] 0 & 0 & 0 & 0 & 0 & 0 \\[1mm] 0 & 0 & 0 & 0 & 0 & 0 \end{pmatrix}$$

$$A_4 = \begin{pmatrix} -2\dfrac{c_r^0}{mv_1} & 4\dfrac{l_r c_r^0}{mv_0^3 v_1} & 0 & 0 & 0 & 0 \\[2mm] 0 & -2\dfrac{l_r^2 c_r^0}{Jv_1} & 0 & 0 & 0 & 0 \\[2mm] 0 & 0 & 0 & 0 & 0 & 0 \\[1mm] 0 & 0 & 0 & 0 & 0 & 0 \\[1mm] 0 & 0 & 0 & 0 & 0 & 0 \\[1mm] 0 & 0 & 0 & 0 & 0 & 0 \end{pmatrix}$$

$$A_5 = \begin{pmatrix} 0 & 0 & 0 & 0 & 0 & 0 \\ 0 & 0 & 0 & 0 & 0 & 0 \\ 0 & 0 & 0 & 0 & 0 & 0 \\ 0 & 0 & 0 & 0 & 0 & 0 \\ 0 & 0 & 0 & 0 & 0 & 0 \\ v_0\left(1-\dfrac{v_0}{v_1}\right) & 0 & 0 & 0 & v_0\left(1-\dfrac{v_0}{v_1}\right) & 0 \end{pmatrix}$$

$$B_1 = \begin{pmatrix} \dfrac{2c_f^0}{mv_0} \\ \dfrac{2l_f c_f^0}{J} \\ 0 \\ 0 \\ 0 \\ 0 \end{pmatrix} \quad B_2 = \begin{pmatrix} 0 \\ 0 \\ 0 \\ 0 \\ 0 \\ 0 \end{pmatrix} \quad B_3 = \begin{pmatrix} \dfrac{2c_f^0}{mv_1} \\ 0 \\ 0 \\ 0 \\ 0 \\ 0 \end{pmatrix} \quad B_4 = \begin{pmatrix} 0 \\ 0 \\ 0 \\ 0 \\ 0 \\ 0 \end{pmatrix} \quad B_5 = \begin{pmatrix} 0 \\ 0 \\ 0 \\ 0 \\ 0 \\ 0 \end{pmatrix}$$

Les valeurs nulles peuvent aussi ne pas être générées ou ne pas être stockées.

Le sous bloc 73 est connecté au sous bloc 74 pour lui transmettre l'ensemble de n, plus particulièrement de cinq, matrices $A_j(v_0,v_1)$ et au sous bloc 75 pour lui transmettre l'ensemble de n, plus particulièrement de deux, vecteurs non nuls $B_j(v_0,v_1)$.

La mémoire du dispositif 40 dédiée au bloc 81 permet d'une part au sous bloc 74 d'exécuter au moyen d'instructions de programme informatique lisibles par un ordinateur, une étape de procédé consistant à générer un ensemble $\{A_j\}_{j=1}^{32}$ de $2^5$ matrices égales chacune à une combinaison linéaire des matrices $A_i$ multipliées par les bornes inférieures ou supérieures de même indice en provenance du sous bloc 72 et multipliées par la période d'échantillonnage T :

$$A_j = T\sum_{i=1}^{5} p_{ij} A_i$$

La mémoire du dispositif 40 dédiée au bloc 81 permet d'autre part au sous bloc 75 d'exécuter au moyen d'instructions de programme informatique lisibles par un ordinateur, une étape de procédé consistant à générer un ensemble $\{B_j\}_{j=1}^{32}$ de $2^5$ vecteurs égaux chacun à une combinaison linéaire des vecteurs $B_i$ multipliées par les bornes inférieures ou supérieures de même indice en provenance du sous bloc 72 et multipliés par la période d'échantillonnage T :

$$B_j = T\sum_{i=1}^{5} p_{ij} B_i$$

La génération des matrices $A_j$ et des vecteurs $B_j$ peut être réalisée par un calcul temps réel des combinaisons linéaires ci-dessus exposées en fonction de la plage de vitesses à laquelle appartient la vitesse v du véhicule.

La génération des matrices $A_j$ et des vecteurs $B_j$ peut alternativement être réalisée par une sélection temps réel en mémoire dédiée au bloc 81, de matrices $A_j$ et de vecteurs $B_j$ préalablement calculés hors ligne lors de la conception du véhicule de la même manière que celle ci-dessus exposées. La sélection est alors effectuée en fonction de la plage de vitesses à laquelle appartient la vitesse v du véhicule.

Lorsqu'il existe une seule plage de vitesses, un jeu unique de matrices $A_j$ et de vecteurs $B_j$ réside en mémoire, la génération consistant alors simplement à lire ce jeu lorsque la vitesse du véhicule est dans la plage de vitesses.

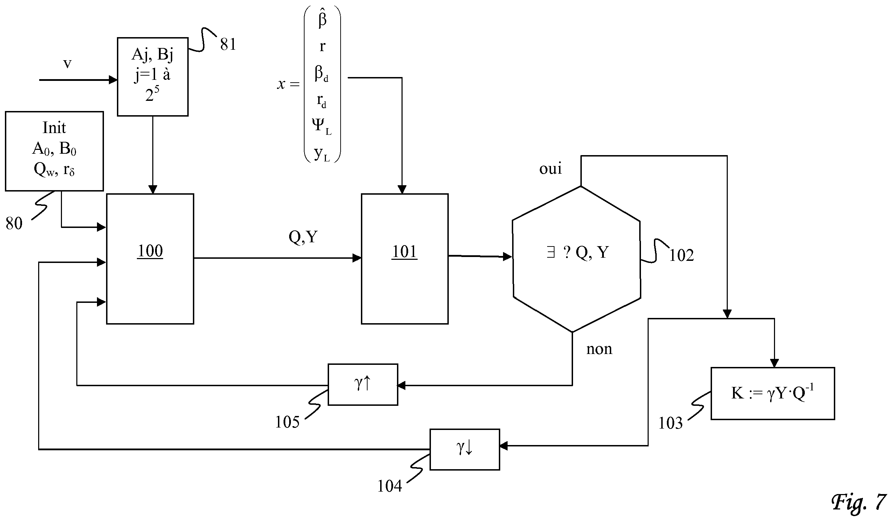

Le bloc 100 d'optimisation convexe représenté en figure 7, reçoit du bloc 80 à l'initialisation les matrices $A_0$, $Q_w$ et le facteur de pondération $r_\delta$ de valeurs constantes. D'autre part le bloc 100 reçoit du bloc 81 à au moins une itération d'échantillonnage les matrices $A_j$ et les vecteurs $B_j$ de valeurs majoritairement constantes à l'exception éventuelle de celles dépendant de la vitesse v du véhicule, ramenées toutefois judicieusement à des constantes pour une plage de vitesses à laquelle appartient la vitesse du véhicule.

Le bloc 100 recherche une matrice Q et un vecteur Y qui vérifient les 32 inéquations matricielles suivantes, chacune attribuée à un couple [$A_j$, $B_j$] reçu du bloc 81 :

$$\begin{pmatrix} Q & Q(I_6 + A_0 T + A_j)^T + Y^T(B_0^\delta T + B_j^\delta)^T & QQ_w^{1/2} & Y^T r_\delta^{1/2} \\ (I_6 + A_0 T + A_j)Q + (B_0^\delta T + B_j^\delta)Y & Q & 0 & 0 \\ Q_w^{1/2}Q & 0 & \gamma I_6 & 0 \\ Yr_\delta^{1/2} & 0 & 0 & \gamma \end{pmatrix} \geq 0$$

où $I_6$ est la matrice unité de dimension 6x6 et $\gamma$ est un scalaire minimisé.

Le bloc 101 d'optimisation convexe recevant les valeurs du vecteur d'état x(k) à chaque instant k d'échantillonnage, impose à la matrice Q de vérifier de plus l'inéquation matricielle suivante :

$$\begin{pmatrix} 1 & x(k)^T \\ x(k) & Q \end{pmatrix} \geq 0$$

Le bloc 102 active un bloc 105 pour augmenter si besoin la valeur du scalaire $\gamma$, par exemple en le multipliant par 1,1 jusqu'à ce qu'il existe une matrice Q et un vecteur Y vérifiant les inéquations d'optimisation convexe définies ci-dessus. Lorsqu'il existe une matrice Q et un vecteur Y vérifiant les inéquations d'optimisation convexe définies ci-dessus, le bloc 102 active un bloc 103 qui donne la valeur du gain vectoriel K en multipliant le scalaire $\gamma$ par le vecteur Y et par l'inverse de la matrice Q. Le bloc 102 active en parallèle un bloc 104 pour diminuer la valeur du scalaire $\gamma$, par exemple en le multipliant par 0,9 de façon à réitérer les étapes de procédé exécutées par les blocs 100 à 103 en minimisant la valeur du scalaire $\gamma$.

Le module 48 communique alors le gain vectoriel K au module 50 qui le multiplie par le vecteur d'état x. En négligeant la constante de temps de réponse du système de braquage des roues relatif à la consigne de braquage, on obtient sur les roues un angle de braquage résultant de l'échantillonnage à l'instant k sous la forme :

$$\delta_f(k) = \delta_f^* = K \cdot x(k) = k_\beta(\hat{\beta} - \beta_d) + k_r(r - r_d) + k_\Psi \Psi_L + k_y y_L$$

ou de façon plus générale

$$\delta_f(k) = \delta_f^* = K \cdot x = k_\beta \hat{\beta} + k_{\beta d} \beta_d + k_r r + k_{rd} r_d + k_\Psi \Psi_L + k_y y_L.$$

Ainsi comme nous le montrons à présent, le dispositif 40 est agencé pour minimiser la fonction de coût $J_\infty(k+1)$ qui comporte les carrés d'écart de trajectoire $(\hat{\beta} - \beta_d)^2$, $(r - r_d)^2$, $\Psi_L^2$, $y_L^2$. On note que le dispositif 40 tel qu'il est spécifié ci-dessus, applique un angle $\delta_f(k)$ de braquage sur les roues avant en fonction de l'échantillonnage à l'instant k qui permet d'obtenir le vecteur d'état x(k+1) à l'instant d'échantillonnage k+1. En absence de perturbation incontrôlée :

$$x(k+1) = x(k) + \dot{x} \cdot T$$

Soit en remplaçant la dérivée du vecteur d'état par son expression faisant intervenir la matrice d'état A et le vecteur d'influence $B^\delta$ de l'angle de braquage :

$$x(k+1) = x(k) + T \cdot A \cdot x(k) + T \cdot B^\delta \cdot \delta_f(k)$$

Puis en remplaçant l'angle de braquage des roues par sa valeur imposée par le dispositif 40 :

$$x(k+1) = (I_6 + T \cdot A + T \cdot B^\delta \cdot K) \cdot x(k)$$

En considérant la fonction de coût $J_\infty(k+1)$ telle qu'on peut la prédire à l'instant d'échantillonnage k+1, suite à l'action effectuée par le dispositif 40 :

$$J_\infty(k+1) = x^T(k+1) \cdot Q_w \cdot x(k+1)$$

Soit en remplaçant x(k+1) par son expression en fonction de x(k) :

$$J_\infty(k+1) =$$
$$x^T(k) \cdot (I_6 + T \cdot A^T + T \cdot K^T \cdot B^{\delta^T}) \cdot Q_w \cdot (I_6 + T \cdot A + T \cdot B^\delta \cdot K) \cdot x(k)$$

Il résulte alors de manière connue de l'optimisation convexe exécutée par les blocs 100 et 101 expliqués ci-dessus que :

$$J_\infty(k+1) \leq J_\infty(k) \leq \gamma$$

Le dispositif 40 est ainsi agencé pour générer une consigne de braquage qui minimise les carrés d'écarts de trajectoire par optimisation convexe appliquée à un ensemble de matrices comprenant la matrice d'état A et la matrice d'influence B.

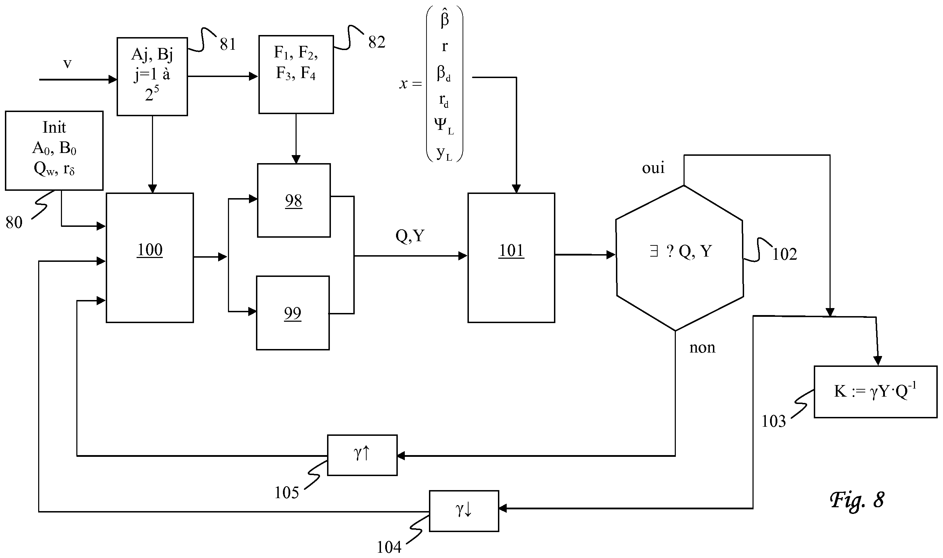

La figure 8 montre une amélioration possible du dispositif 40 par rapport à la structure qui en a été présenté ci-dessus en référence à la figure 7.

Le module 48 comprend ici un bloc 82 et un bloc 98 pour éviter la saturation des pneus en cherchant à limiter l'angle de dérive $\alpha_f$ des roues avant et l'angle de dérive $\alpha_r$ des roues arrière.

Les angles de dérive peuvent être approximés de la manière suivante :

$$\alpha_f \cong -\beta - r\frac{l_f}{v} + \delta_f$$

$$\alpha_r \cong -\beta + r\frac{l_r}{v}$$

Le bloc 82 est connecté au bloc 81 pour recevoir les composantes de vitesse $v_0$ et $v_1$ produites par le sous bloc 73 de manière à générer deux vecteurs lignes $F_1$, $F_2$ relatifs aux roues avant et deux vecteurs lignes $F_3$, $F_4$ relatifs aux roues arrière :

$$F_1 = \begin{bmatrix} -1 & \dfrac{-l_f}{v_0} & 0 & 0 & 0 & 0 \end{bmatrix}, F_2 = \begin{bmatrix} 0 & \dfrac{-l_f}{v_1} & 0 & 0 & 0 & 0 \end{bmatrix}$$

$$F_3 = \begin{bmatrix} -1 & \dfrac{-l_r}{v_0} & 0 & 0 & 0 & 0 \end{bmatrix}, F_4 = \begin{bmatrix} -1 & \dfrac{-l_r}{v_1} & 0 & 0 & 0 & 0 \end{bmatrix}$$

Le bloc 82 est connecté au bloc 98 pour lui communiquer les quatre vecteurs $F_1$, $F_2$, $F_3$, $F_4$.

Le bloc 98 contient ou accède à deux limites maximales prescrites $\alpha_f^{max}$ et $\alpha_r^{max}$ attribuées chacune respectivement à l'angle de dérive $\alpha_f$ des roues avant et à l'angle de dérive $\alpha_r$ des roues arrière. Le bloc 98 contient ou accède également à deux variables réelles positives d'ajustage $\lambda_1$ et $\lambda_2$ pour éviter le cas où des niveaux trop bas des limites maximales prescrites empêchent l'optimisation convexe d'aboutir.

Le bloc 98 impose à la matrice Q de satisfaire, en plus des inéquations des blocs 100 et 101, les inéquations matricielles suivantes :

$$\begin{pmatrix} \left(\alpha_f^{\max}\right)^2 + \lambda_1 & F_1 Q + p_5^{\min} F_2 Q + Y \\ \left(F_1 Q + p_5^{\min} F_2 Q + Y\right)^T & Q \end{pmatrix} \geq 0$$

$$\begin{pmatrix} \left(\alpha_f^{\max}\right)^2 + \lambda_1 & F_1 Q + p_5^{\max} F_2 Q + Y \\ \left(F_1 Q + p_5^{\max} F_2 Q + Y\right)^T & Q \end{pmatrix} \geq 0$$

$$\begin{pmatrix} \left(\alpha_r^{\max}\right)^2 + \lambda_2 & F_3 Q + p_5^{\min} F_4 Q \\ \left(F_3 Q + p_5^{\min} F_4 Q\right)^T & Q \end{pmatrix} \geq 0$$

$$\begin{pmatrix} \left(\alpha_r^{\max}\right)^2 + \lambda_2 & F_3 Q + p_5^{\max} F_4 Q \\ \left(F_3 Q + p_5^{\max} F_4 Q\right)^T & Q \end{pmatrix} \geq 0$$

De la sorte, lorsque les inéquations ci-dessus sont satisfaites en annulant les variables réelles positives d'ajustage $\lambda_1$ et $\lambda_2$, le gain K généré par le bloc 103 permet de maintenir les angles de dérive des roues en dessous des limites maximales prescrites et ainsi de réduire le risque de saturation des pneus :

$$|\alpha_f| \cong \left| -\beta - r\frac{l_f}{v} + \delta_f \right| \leq \alpha_f^{\max}$$

$$|\alpha_r| \cong \left| -\beta + r\frac{l_r}{v} \right| \leq \alpha_r^{\max}$$

Lorsque les inéquations ci-dessus sont satisfaites avec des valeurs non nulles des variables réelles positives d'ajustage $\lambda_1$ et $\lambda_2$, le gain K généré par le bloc 103 permet aux angles de dérive des roues de dépasser sensiblement les limites maximales prescrites en augmentant le risque de saturation des pneus dans de faibles proportions si les valeurs des variables réelles positives d'ajustage $\lambda_1$ et $\lambda_2$ restent faibles.

Indépendamment ou en combinaison avec le bloc 98, le bloc 99 contient ou accède à une limites maximale prescrite $\delta_f^{\max}$ d'angle de braquage $\delta_f$ des roues avant. Le bloc 99 contient ou accède également à une variable réelle positive d'ajustage $\lambda_3$ pour éviter le cas où un niveau trop bas de la limite maximale prescrite empêche l'optimisation convexe d'aboutir.

Le bloc 99 impose à la matrice Q de satisfaire, en plus des inéquations des blocs 100 et 101, l'inéquation matricielle suivante :

$$\begin{pmatrix} \left(\delta_f^{\max}\right)^2 + \lambda_3 & Y \\ \left(Y\right)^T & Q \end{pmatrix} \geq 0$$

De la sorte, lorsque l'inéquation ci-dessus est satisfaite en annulant la variable réelle positive d'ajustage $\lambda_3$, le gain K généré par le bloc 103 permet de maintenir l'angle de braquage des roues en dessous de la limite maximale prescrite et ainsi de réduire le risque de saturation du contrôle de trajectoire effectué par le dispositif 40 :

$$\left|\mathrm{Kx}\right| \leq \delta_{\mathrm{f}}^{\ max}$$

Lorsque l'inéquation ci-dessus est satisfaite avec une valeur non nulle de la variable réelle positive d'ajustage $\lambda_3$, le gain K généré par le bloc 103 permet à la consigne d'angle de braquage des roues de dépasser sensiblement la limite maximale prescrite. Cependant, l'angle de braquage des roues ne pouvant dépasser mécaniquement la limite maximale prescrite, l'atteinte de cette valeur augmente le risque de saturation du contrôle procuré par le dispositif 40, toutefois dans de faibles proportions si la valeur de la variable réelle positive d'ajustage $\lambda_3$ reste faible.

Le dispositif 40 est aisément modifiable, en d'autres termes différemment configurable, en usine pour générer d'autres consignes d'action sur le véhicule en prenant en considération le même vecteur d'état x que ci-dessus.

Il suffit d'adapter simplement le module 48 de génération du gain K. Dans cette adaptation, la matrice d'état A ne change pas. Seul le vecteur d'influence B change.

Bien entendu, la configuration adoptée du dispositif 40 avant montage sur le véhicule, détermine les conditions d'installation du dispositif 40 sur le véhicule 1.

Dans l'exemple expliqué en détails ci-dessus pour générer une consigne d'action sur le braquage des roues avant du véhicule, la consigne $\delta_f^*$ obtenue sur la sortie 46 est connectée au mécanisme de braquage des roues.

Dans un autre exemple expliqué à présent, l'action est exercée sur le moment de lacet du véhicule. Le dispositif 40 est alors monté sur le véhicule de façon à connecter la consigne de moment de lacet $T_{yaw}^*$ obtenue sur la sortie 46 vers un mécanisme qui applique un couple de lacet, par exemple par freinage différentiel des roues ou par répartition différentielle du couple de traction ou de propulsion appliqué aux roues du véhicule.

Les considérations habituelles de mécanique dynamique conduisent à un vecteur d'influence $B_{yaw}$ défini de la façon suivante :

$$B_{yaw} = \begin{pmatrix} 0 \\ \dfrac{1}{J} \\ 0 \\ 0 \\ 0 \\ 0 \end{pmatrix}$$

Le vecteur d'influence $B_{yaw}$ relatif au moment de lacet étant indépendant de la vitesse v du véhicule et des coefficients d'adhérence, seul $B_0 = B_{yaw}$ est non nul. Les 32 vecteurs $B_j$ du bloc 81 sont tous nuls.

Cela étant, les autres blocs du module 48 fonctionnent de manière identique mais pour aboutir à un autre résultat qui est le gain $K_{yaw}$ du fait de la structure différente du vecteur d'influence.

Plusieurs consignes d'actions peuvent être aussi combinées. Le dispositif 40 comprend alors plusieurs sorties semblables à la sortie 46, par exemple une sortie 46 dédiée à la consigne de braquage des roues avant et une autre sortie 46 dédiée à la consigne de couple de lacet. Plusieurs sorties 46 peuvent être différenciées l'une de l'autre même si une seule consigne d'action est appliquée pour permettre d'éviter les erreurs de montage.

Dans les inéquations matricielles linéaires mise en oeuvre par les blocs 100 et 101, le vecteur d'influence est alors égal à la somme des vecteurs d'influence relatif à chaque action, le gain K est une concaténation des h gains $K_\delta$, $K_{yaw}$ relatifs à chaque action, le vecteur Y devient une matrice de dimension hx6, notamment 2x6.

L'exemple de mise en oeuvre illustré ci-dessus montre un calcul du gain K en temps réel dans le dispositif 40 pour chaque plage de vitesse à laquelle appartient la vitesse v du véhicule et en fonction du vecteur d'état x(k) à l'instant d'échantillonnage k.

On peut aussi calculer préalablement le gain K hors ligne sur le même modèle que celui expliqué ci-dessus, pour chaque plage de vitesse et pour une succession de valeurs possibles de chaque composante du vecteur d'état x. Les valeurs de gain K sont alors stockées en mémoire du module 48 dans une structure de données à six dimensions pour une seule plage de vitesse et à sept dimensions pour plusieurs plages de vitesse.

La vitesse v du véhicule et les coordonnées du vecteur d'état x échantillonnées à chaque instant k, viennent alors adresser dans le module 48, le groupe de hx6 cellules de la structure de donnée qui contiennent les valeurs appropriées de K pré calculées.

**Revendications**

1. Dispositif (40) de contrôle de trajectoire d'un véhicule (1), comprenant un module (50) d'élaboration en temps réel d'une consigne d'action stabilisante ($\delta_f{}^*$, $T_{yaw}{}^*$) applicable sur le véhicule en multipliant un vecteur d'état (x) du véhicule par un gain (K) à chaque instant d'échantillonnage (k), **caractérisé en ce qu'**il comprend :

   - un module (48) de production du gain (K) adapté en temps réel à une plage de vitesse à laquelle appartient la vitesse (v) du véhicule (1) et au vecteur d'état (x) en minimisant une somme d'au moins deux carrés d'écarts $((\hat{\beta}-\beta_d)^2$, $(r-r_d)^2$, $\Psi_L{}^2$, $y_L{}^2)$ de trajectoire déduits du vecteur d'état (x).

2. Procédé de contrôle de trajectoire d'un véhicule, comprenant des étapes :

   - d'élaboration en temps réel d'une consigne d'action stabilisante ($\delta_f{}^*$, $T_{yaw}{}^*$) applicable sur le véhicule en multipliant un vecteur d'état (x) du véhicule par un gain (K) à chaque instant d'échantillonnage (k) ;
   - de production du gain (K) adapté en temps réel à une plage de vitesse à laquelle appartient la vitesse (v) du véhicule et au vecteur d'état (x) en minimisant une somme d'au moins deux carrés d'écart $((\hat{\beta}-\beta_d)^2$, $(r-r_d)^2$, $\Psi_L{}^2$, $y_L{}^2)$ de trajectoire déduit du vecteur d'état (x).

3. Procédé de contrôle de trajectoire d'un véhicule selon la revendication 2, **caractérisé en ce que** les étapes de production du gain (K) comprennent des étapes :

   - de linéarisation (81) au moins d'une matrice d'état (A) en fonction au moins de la vitesse (v) du véhicule, exécutées en temps réel ou préalablement hors ligne.

4. Procédé de contrôle de trajectoire d'un véhicule selon la revendication 3, **caractérisé en ce que** les étapes de linéarisation comprennent des étapes :

   - de linéarisation (73) d'au moins un vecteur d'influence (B) en fonction au moins de la vitesse (v) du véhicule.

5. Procédé de contrôle de trajectoire d'un véhicule selon l'une des revendications 3 ou 4, **caractérisé en ce que** les étapes de linéarisation comprennent des étapes :

   - de linéarisation (72) de la matrice d'état (A) en fonction d'au moins une rigidité de dérive (c) de roue du véhicule.

6. Procédé de contrôle de trajectoire d'un véhicule selon l'une des revendications 3 à 5, **caractérisé en ce que** les étapes de linéarisation comprennent des étapes :

   - de linéarisation (72) d'au moins un vecteur d'influence (B) en fonction d'au moins une rigidité de dérive (c) de roue du véhicule.

7. Procédé de contrôle de trajectoire d'un véhicule selon l'une des revendications 3 à 6, **caractérisé en ce que** les étapes de linéarisation comportent des étapes :

   - d'encadrement (73, 74) de la matrice d'état (A) en relation avec au moins la vitesse (v) du véhicule.

8. Procédé de contrôle de trajectoire d'un véhicule selon l'une des revendications 3 à 7. **caractérisé en ce que** les étapes de linéarisation comportent des étapes :

   - d'encadrement (73, 75) du ou des vecteurs d'influence (B) en relation avec au moins la vitesse (v) du véhicule.

9. Procédé de contrôle de trajectoire d'un véhicule selon les revendications 5 et 6, **caractérisé en ce que** les étapes de linéarisation (72, 73) se combinent aux étapes d'encadrement (73, 75) de la matrice d'état (A) en relation avec la ou les rigidités de dérive (c) de roue du véhicule.

10. Procédé de contrôle de trajectoire d'un véhicule selon les revendications 5 et 6, **caractérisé en ce que** les étapes de linéarisation (72, 73) se combinent aux étapes d'encadrement (74, 75) du ou des vecteurs d'influence (B) et/ou de la matrice d'état (A) en relation avec la ou les rigidités de dérive (c) de roue du véhicule.

**11.** Procédé de contrôle de trajectoire d'un véhicule selon l'une des revendications 2 à 10, **caractérisé en ce que** les étapes de production du gain (K) comprennent des étapes :

- d'optimisation convexe (98, 99, 100 à 105) par inégalités matricielles linéaires exécutées en temps réel ou préalablement hors ligne pour minimiser ladite somme d'au moins deux carrés d'écarts $((\hat{\beta}-\beta_d)^2$, $(r-r_d)^2$, $\Psi_L^2$, $y_L^2)$ de trajectoire déduits du vecteur d'état (x).

**12.** Procédé de contrôle de trajectoire d'un véhicule selon la revendication 11, **caractérisé en ce que** les étapes d'optimisation convexe comprennent des étapes (98, 99) de maintien d'angles de dérive et/ou des angles de braquage des roues en dessous de limites maximales prescrites.

**13.** Programme d'ordinateur comprenant des instructions de code de programme pour l'exécution des étapes du procédé selon l'une des revendications 2 à 12 lorsque ledit programme est exécuté sur un ordinateur.

**14.** Dispositif (40) selon la revendication 1, **caractérisé en ce que**, dans ladite somme, le carré de chaque écart $((\beta-\beta_d)^2_{k+t}$, $(r-r_d)^2_{k+t}$, $(\Psi_L)^2_{k+t}$, $(y_L)^2_{k+t})$, est pondéré respectivement par un coefficient $(q_\beta$, $q_r$, $q_\psi$, $q_y)$ paramétrable.

**15.** Dispositif (40) selon l'une des revendications 1 ou 14, **caractérisé en ce qu'**il comprend un bloc d'allure (81) pour exprimer sous forme de combinaison linéaire de matrices $(A_1, A_2, A_3, A_4, A_5)$ à valeurs constantes dans une plage de vitesses, au moins une matrice d'état (A) permettant d'obtenir une variation temporelle $(\dot{x})$ dudit vecteur d'état (x) en le multipliant par ladite matrice d'état (A).

**Patentansprüche**

**1.** Vorrichtung (40) zur Steuerung der Fahrlinie eines Fahrzeugs (1), umfassend ein Modul (50) zur Echtzeitausarbeitung eines stabilisierenden Aktionssollwerts $(\delta_f{}^*$, $T_{yaw}{}^*)$, der am Fahrzeug anwendbar ist, wobei ein Zustandsvektor (x) des Fahrzeugs mit einem Zugewinn (K) zu jedem Probenahmezeitpunkt (k) multipliziert wird, **dadurch gekennzeichnet, dass** sie umfasst:

- ein Modul (48) zur Erzeugung des Zugewinns (K), der in Echtzeit an einen Geschwindigkeitsbereich, dem die Geschwindigkeit (v) des Fahrzeugs (1) angehört, und den Zustandsvektor (x) angepasst wird, wobei eine Summe von mindestens zwei Abweichungsquadraten $((\hat{\beta}-\beta_d)^2$, $(r-r_d)^2$, $\psi_L^2$, $y_L^2)$ einer Fahrlinie, die von dem Zustandsvektor (x) abgeleitet werden, minimiert wird.

**2.** Verfahren zur Steuerung der Fahrlinie eines Fahrzeugs, umfassend die Schritte:

- der Echtzeitausarbeitung eines stabilisierenden Aktionssollwerts $(\delta_f{}^*$, $T_{yaw}{}^*)$, der am Fahrzeug anwendbar ist, wobei ein Zustandsvektor (x) des Fahrzeugs mit einem Zugewinn (K) zu jedem Probenahmezeitpunkt (k) multipliziert wird,
- der Erzeugung des Zugewinns (K), der in Echtzeit an einen Geschwindigkeitsbereich, dem die Geschwindigkeit (v) des Fahrzeugs angehört, und den Zustandsvektor (x) angepasst wird, wobei eine Summe von mindestens zwei Abweichungsquadraten $((\hat{\beta}-\beta_d)^2$, $(r-r_d)^2$, $\psi_L^2$, $y_L^2)$ einer Fahrlinie, die von dem Zustandsvektor (x) abgeleitet werden, minimiert wird.

**3.** Verfahren zur Steuerung der Fahrlinie eines Fahrzeugs nach Anspruch 2, **dadurch gekennzeichnet, dass** die Schritte der Erzeugung des Zugewinns (K) die folgenden Schritte umfassen:

- Linearisierung (81) mindestens einer Zustandsmatrix (A) in Abhängigkeit von mindestens der Geschwindigkeit (v) des Fahrzeugs, ausgeführt in Echtzeit oder vorher offline.

**4.** Verfahren zur Steuerung der Fahrlinie eines Fahrzeugs nach Anspruch 3, **dadurch gekennzeichnet, dass** die Linearisierungsschritte die folgenden Schritte umfasst:

- Linearisierung (73) mindestens eines Einflussvektors (B) in Abhängigkeit von mindestens der Geschwindigkeit (v) des Fahrzeugs.

**5.** Verfahren zur Steuerung der Fahrlinie eines Fahrzeugs nach einem der Ansprüche 3 oder 4, **dadurch gekenn-**

**zeichnet, dass** die Linearisierungsschritte die folgenden Schritte umfassen:

- Linearisierung (72) der Zustandsmatrix (A) in Abhängigkeit von mindestens einer Schräglaufsteifigkeit (c) eines Rades des Fahrzeugs.

6. Verfahren zur Steuerung der Fahrlinie eines Fahrzeugs nach einem der Ansprüche 3 bis 5, **dadurch gekennzeichnet, dass** die Linearisierungsschritte die folgenden Schritte umfassen:

- Linearisierung (72) mindestens eines Einflussvektors (B) in Abhängigkeit von mindestens einer Schräglaufsteifigkeit (c) eines Rades des Fahrzeugs.

7. Verfahren zur Steuerung der Fahrlinie eines Fahrzeugs nach einem der Ansprüche 3 bis 6, **dadurch gekennzeichnet, dass** die Linearisierungsschritte die folgenden Schritte umfassen:

- Einrahmung (73, 74) der Zustandsmatrix (A) in Verbindung mit mindestens der Geschwindigkeit (v) des Fahrzeugs.

8. Verfahren zur Steuerung der Fahrlinie eines Fahrzeugs nach einem der Ansprüche 3 bis 7, **dadurch gekennzeichnet, dass** die Linearisierungsschritte die folgenden Schritte umfassen:

- Einrahmung (73, 75) des oder der Einflussvektoren (B) in Verbindung mit mindestens der Geschwindigkeit (v) des Fahrzeugs.

9. Verfahren zur Steuerung der Fahrlinie eines Fahrzeugs nach den Ansprüchen 5 und 6, **dadurch gekennzeichnet, dass** die Linearisierungsschritte (72, 73) mit den Einrahmungsschritten (73, 75) der Zustandsmatrix (A) in Verbindung mit der oder den Schräglaufsteifigkeiten (c) eines Rades des Fahrzeugs kombiniert werden.

10. Verfahren zur Steuerung der Fahrlinie eines Fahrzeugs nach den Ansprüchen 5 und 6, **dadurch gekennzeichnet, dass** die Linearisierungsschritte (72, 73) mit den Einrahmungsschritten (74, 75) des oder der Einflussvektoren (B) und/oder der Zustandsmatrix (A) in Verbindung mit der oder den Schräglaufsteifigkeiten (c) eines Rades des Fahrzeugs kombiniert werden.

11. Verfahren zur Steuerung der Fahrlinie eines Fahrzeugs nach einem der Ansprüche 2 bis 10, **dadurch gekennzeichnet, dass** die Schritte der Erzeugung des Zugewinns (K) die folgenden Schritte umfassen:

- konvexe Optimierung (98, 99, 100 bis 105) durch lineare Matrixungleichheiten, die in Echtzeit oder vorher offline ausgeführt werden, um die Summe von mindestens zwei Abweichungsquadraten $((\hat{\beta}-\beta_d)^2, (r-r_d)^2, \psi_L^2, y_L^2)$ einer Fahrlinie, die von dem Zustandsvektor (x) abgeleitet werden, zu minimieren.

12. Verfahren zur Steuerung der Fahrlinie eines Fahrzeugs nach Anspruch 11, **dadurch gekennzeichnet, dass** die Schritte der konvexen Optimierung Schritte (98, 99) zur Aufrechterhaltung von Schräglaufwinkeln und/oder Einschlagwinkeln der Räder unter maximal vorgeschriebenen Grenzen umfassen.

13. Computerprogramm, umfassend Programmcodeanweisungen für die Ausführung der Schritte des Verfahrens nach einem der Ansprüche 2 bis 12, wenn das Programm auf einem Computer ausgeführt wird.

14. Vorrichtung (40) nach Anspruch 1, **dadurch gekennzeichnet, dass** in der Summe das Quadrat jeder Abweichung $((\beta-\beta_d)^2_{k+1}, (r-r_d)^2_{k+1}, (\psi_L)^2_{k+1}, (y_L)^2_{k+1})$ jeweils durch einen parametrierbaren Koeffizienten $(q_\beta, q_r, q_\psi, q_y)$ gewichtet wird.

15. Vorrichtung (40) nach einem der Ansprüche 1 oder 14, **dadurch gekennzeichnet, dass** sie einen Verlaufsblock (81) umfasst, um in Form einer linearen Kombination von Matrizes $(A_1, A_2, A_3, A_4, A_5)$ mit konstanten Werten in einem Geschwindigkeitsbereich mindestens eine Zustandsmatrix (A) auszudrücken, die es ermöglicht, eine zeitliche Variation (x) des Zustandsvektors (x) zu erhalten, wobei er mit der Zustandsmatrix (A) multipliziert wird.

**EP 2 870 040 B1**

**Claims**

1. Device (40) for controlling the trajectory of a vehicle (1) comprising a module (50) for developing, in real time, a stabilizing action set point ($\delta_f^*$, $T_{yaw}^*$), applicable to the vehicle by multiplying a state vector (x) of the vehicle by a gain (K) at each sampling point (k), **characterized in that** it comprises:

   - a module (48) for producing the gain (K) adapted in real time to a speed range containing the speed (v) of the vehicle (1) and to the state vector (x) by minimizing a sum of at least two squares of trajectory deviations (($\hat{\beta}$-$\beta_d$)$^2$, (r-r$_d$)$^2$, $\Psi L^2$, yL$^2$) deduced from the state vector (x).

2. Method for controlling the trajectory of a vehicle, comprising steps of:

   - developing, in real time, a stabilizing action set point ($\delta_f^*$, $T_{yaw}^*$) applicable to the vehicle by multiplying a state vector (x) of the vehicle by a gain (K) at each sampling point (k);
   - producing the gain (K) adapted in real time to a speed range containing the speed (v) of the vehicle and to the state vector (x) by minimizing a sum of at least two squares of trajectory deviations (($\hat{\beta}$-$\beta_d$)$^2$, (r-r$_d$)$^2$, $\Psi L^2$, yL$^2$) deduced from the state vector (x).

3. Method for controlling the trajectory of a vehicle according to Claim 2, **characterized in that** the steps of producing the gain (K) comprise steps of:

   - linearizing (81) at least one state matrix (A) at least as a function of the speed (v) of the vehicle, executed in real time or in advance offline.

4. Method for controlling the trajectory of a vehicle according to Claim 3, **characterized in that** the linearization steps comprise steps of:

   - linearizing (73) at least one influence vector (B) at least as a function of the speed (v) of the vehicle.

5. Method for controlling the trajectory of a vehicle according to one of Claims 3 and 4, **characterized in that** the linearization steps comprise steps of:

   - linearizing (72) the state matrix (A) as a function of at least one vehicle wheel drift rigidity (c).

6. Method for controlling the trajectory of a vehicle according to one of Claims 3 to 5, **characterized in that** the linearization steps comprise steps of:

   - linearizing (72) at least one influence vector (B) as a function of at least one vehicle wheel drift rigidity (c).

7. Method for controlling the trajectory of a vehicle according to one of Claims 3 to 6, **characterized in that** the linearization steps comprise steps of:

   - framing (73, 74) the state matrix (A) in relation to at least the speed (v) of the vehicle.

8. Method for controlling the trajectory of a vehicle according to one of Claims 3 to 7, **characterized in that** the linearization steps comprise steps of:

   - framing (73, 75) the influence vector or vectors (B) in relation to at least the speed (v) of the vehicle.

9. Method for controlling the trajectory of a vehicle according to Claims 5 and 6, **characterized in that** the linearization steps (72, 73) are combined with the steps (73, 75) of framing the state matrix (A) in relation to the vehicle wheel drift rigidity or rigidities (c).

10. Method for controlling the trajectory of a vehicle according to Claims 5 and 6, **characterized in that** the linearization steps (72, 73) are combined with the steps (74, 75) of framing the influence vector or vectors (B) and/or the state matrix (A) in relation to the vehicle wheel drift rigidity or rigidities (c).

11. Method for controlling the trajectory of a vehicle according to one of Claims 2 to 10, **characterized in that** the steps

21

of producing the gain (K) comprise steps of:

- convex optimization (98, 99, 100 to 105) by linear matrix inequalities executed in real time or in advance offline to minimize said sum of at least two squares of trajectory deviations $((\hat{\beta}-\beta_d)^2, (r-r_d)^2, \Psi L^2, yL^2)$ deduced from the state vector (x) .

12. Method for controlling the trajectory of a vehicle according to Claim 11, **characterized in that** the convex optimization steps comprise steps (98, 99) of keeping drift angles and/or steering angles of the wheels below specified maximum limits.

13. Computer program comprising program code instructions for executing the steps of the method according to one of Claims 2 to 12 when said program is executed on a computer.

14. Device (40) according to Claim 1, **characterized in that**, in said sum, the square of each deviation $((\beta-\beta_d)^2_{k+t}$, $(r-r_d)^2_{k+t}$, $(\Psi L)^2_{k+t}$, $(yL)^2_{k+t})$ is weighted respectively by a configurable coefficient $(q_\beta, q_r, q_\Psi, q_y)$.

15. Device (40) according to one of Claims 1 and 14, **characterized in that** it comprises a pace block (81) to express, in the form of a linear combination of matrices $(A_1, A_2, A_3, A_4, A_5)$ with constant values in a speed range, at least one state matrix (A) being used to obtain a time variation $(\dot{x})$ of said state vector (x) by multiplying it by said state matrix (A).

Fig. 1

Fig. 2

*Fig. 3*

*Fig. 4*

*Fig. 5*

70

$$w = \begin{pmatrix} q_\beta \\ q_r \\ q_\Psi \\ q_y \\ r_\delta \end{pmatrix}$$

$$Q_w := \begin{pmatrix} q_\beta & 0 & -q_\beta & 0 & 0 & 0 \\ 0 & q_r & 0 & -q_r & 0 & 0 \\ -q_\beta & 0 & q_\beta & 0 & 0 & 0 \\ 0 & -q_r & 0 & q_r & 0 & 0 \\ 0 & 0 & 0 & 0 & q_\Psi & 0 \\ 0 & 0 & 0 & 0 & 0 & q_y \end{pmatrix}$$

$$Q_w \cdot r_\delta$$

Fig. 6

Fig. 7

v →

Aj, Bj
j=1 à
$2^5$    ⟜ 81

$F_1, F_2,$
$F_3, F_4$    ⟜ 82

Init
$A_0, B_0$
$Q_w, r_\delta$

80

100

98

99

$x = \begin{pmatrix} \hat{\beta} \\ r \\ \beta_d \\ r_d \\ \Psi_L \\ y_L \end{pmatrix}$

Q,Y

101

oui

$\exists ? Q, Y$    ⟜ 102

non

103

$K := \gamma Y \cdot Q^{-1}$

$\gamma\uparrow$

105

$\gamma\downarrow$

104

*Fig. 8*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102011085423
- EP 1790542 A
- EP 1544080 B1